# EUROPEAN PATENT SPECIFICATION

(11) **EP 0 953 788 B1**
(45) Date of publication and mention of the grant of the patent: **23.02.2005**
(21) Application number: 99303155.8
(22) Date of filing: 23.04.1999
(51) Int. Cl.: F16F 13/10, F16F 13/18

(54) **Hydraulically damped mounting device**
Hydraulisch gedämpfte Lagervorrichtung
Dispositif de support amorti hydrauliquement

(30) Priority: 27.04.1998 GB 9808942
(43) Date of publication of application: 03.11.1999
(73) Proprietor: AVON VIBRATION MANAGEMENT SYSTEMS LIMITED, Chippenham, Wiltshire SN14 6NF (GB)
(72) Inventor: Griggs, Michael, Wiltshire, BA15 1SS (GB)
(74) Representative: Calderbank, Thomas Roger

(56) References cited:
- FR-A- 2 587 429
- GB-A- 2 152 182
- GB-A- 2 247 733
- US-A- 4 262 886
- US-A- 4 424 960
- US-A- 4 886 253
- US-A- 5 531 426

## Description

The present invention relates to a hydraulically damped mounting device. Such a device usually has a pair of chambers for hydraulic fluid, connected by suitable passageway, and damping is achieved due to the flow of fluid through that passageway.

EP-A-0115417 and EP-A-0172700 discussed two different types of hydraulically damped mounting devices for damping vibration between two parts of a piece of machinery, e.g. a car engine and a chassis. EP-A-0115417 disclosed various "cup and boss" type of mounting devices, in which a "boss", forming one anchor part to which one of the pieces of machinery was connected, was itself connected via a deformable (normally resilient) wall to the mouth of a "cup", which was attached to the other piece of machinery and formed another anchor part. The cup and the resilient wall then defined a working chamber for hydraulic fluid, which was connected to a compensation chamber by a passageway (usually elongate) which provided the damping orifice. The compensation chamber was separated from the working chamber by a rigid partition, and a flexible diaphragm was in direct contact with the liquid and, together with the partition formed a gas pocket.

In EP-A-0172700 the mounting devices disclosed were of the "bush" type. In this type of mounting device, the anchor part for one part of the vibrating machinery is in the form of a hollow sleeve with the other anchor part in the form of a rod or tube extending approximately centrally and coaxially of the sleeve. In EP-A-0172700 the tubular anchor part was connected to the sleeve by resilient walls, which defined one of the chambers in the sleeve. The chamber was connected via a passageway to a second chamber bounded at least in part by a bellows wall which was effectively freely deformable so that it could compensate for fluid movement through the passageway without itself resisting that fluid movement.

In the hydraulically damped mounting devices disclosed in the specifications discussed above, there was a single passageway. It is also known, from other hydraulically damped mounting devices, to provide a plurality of independent passageways linking the chambers for hydraulic fluid.

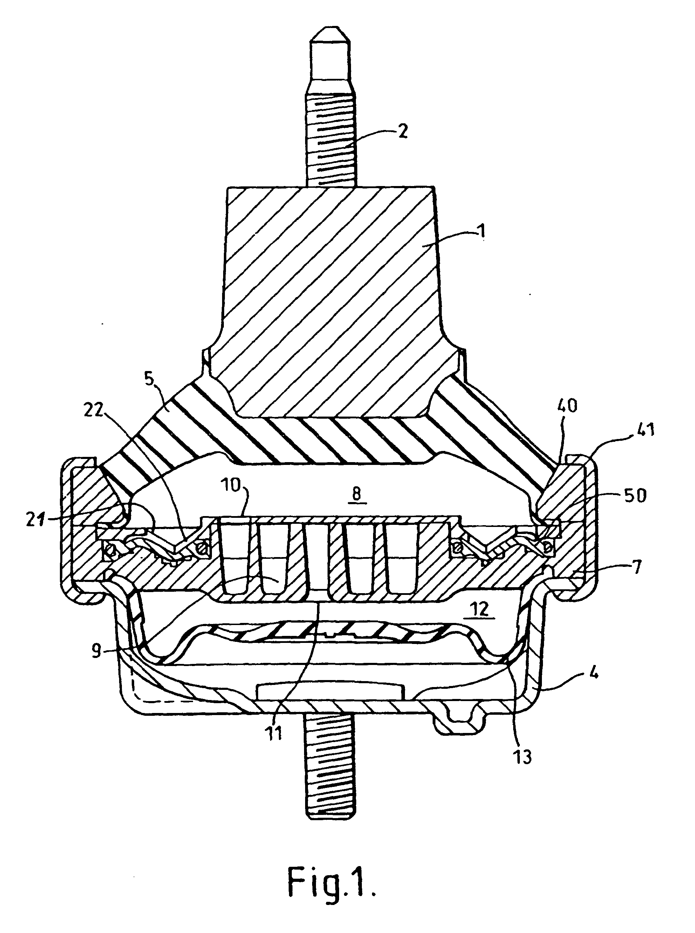

Fig. 1 of the accompanying drawings shows one example of a "cup and boss" type of mounting device, and has been disclosed in our UK patent application No. 2282430. The mounting device is for damping vibration between two parts of a structure(not shown), and has a boss 1 connected via a fixing bolt 2 to one of the parts of the structure, and the other part of the structure is connected to a generally U-shaped cup 4. A resilient spring 5 of e.g. rubber interconnects the boss 1 and the cup 4. A partition 7 is also attached to the cup 4 and extends across the mouth of the cup 4. Thus, a working chamber 8 is defined within the mount, bounded by the resilient spring 5 and the partition 7.

The interior of the partition 7 defines a convoluted passageway 9 which is connected to the working chamber 8 via an opening 10 and is also connected via an opening 11 to a compensation chamber 12. Thus, when the boss 1 vibrates relative to the cup 4 (in the vertical direction in Fig. 1), the volume of the working chamber 8 will change, and hydraulic fluid in that working chamber 8 will be forced through the passageway 9 into, or out of, the compensation chamber 12. This fluid movement causes damping. The volume of the compensation chamber 12 needs to change in response to such fluid movement, and therefore the compensation chamber 12 is bounded by a flexible wall 13.

In use, the force received by the mounting device is principally parallel to the fixing bolt 1, and this direction defines an axis of the boss 1.

The above structure is generally similar to that described in EP-A-0115417, and the manner of operation is similar. In EP-A-0115417, the partition supported a diaphragm which acted as a boundary between fluid in the working chamber and a gas pocket. In the arrangement shown as Fig. 1, there is an annular diaphragm 50 which is convoluted. That diaphragm 50 is held on the partition 7 by an upper snubber plate 22, that snubber plate 22 is held in place by a ring 40, which is clamped to the partition 7 and to the cup 4, by a clamping ring

The resilient spring is also connected to the ring. The upper snubber plate has openings 21 which permits fluid in the working chamber 8 to contact the diaphragm.

In the arrangement shown in Fig. 1, the passageway is in the form of a spiral, and the internal dimensions of that spiral are uniform.

FR-A-2587429 discloses a hydraulically damped mounting device in which two anchor bodies vibrate relative to one another. The bodies are interconnected by a resilient wall which partially bounds a working chamber for hydraulic fluid interconnected to a compensation chamber by a passageway. There is at least one side chamber in the resilient wall which gives the resilient wall of the mounting device a radially asymmetric deformation characteristic. Thus this document corresponds to the pre-characterising part of claim 1.

According to the present invention there is provided a hydraulically damped mounting device for supporting a load, comprising first and second anchor bodies vibratable relative to each other in an axial direction, a resilient wall interconnecting the first and second anchor bodies and supporting the first anchor body axially above the second anchor body, a working chamber for hydraulic fluid axially between the first and second anchor bodies, the working chamber being partially bounded by the resilient wall;
a compensation chamber for the hydraulic fluid and partially bounded by a bellows wall;
a passageway interconnecting the working and compensation chambers,
at least one side chamber in the resilient wall, the at least one side chamber being arranged to impart a radially asymmetric deformation characteristic to said resilient wall, and being filled with hydraulic fluid;
characterized in that;
the at least one side chamber communicates with the working chamber.

Thus, in accordance with the present invention (which is defined in claim 1), a hydraulically damped mounting device for supporting an axial load may include a boss defining an axis and a second anchor body axially spaced from the boss, a resilient wall extending circumferentially around the boss and from the boss to the second anchor body.

The number and locations of the side chambers are selected to produce a selected stiffness characteristic. For example, two side chambers may be provided in opposed locations on either side of the axis. The side chambers may then be symmetric with respect to reflections in a first plane including the centre of the side chambers and the axis of the boss, and in a second plane perpendicular to the first and including the axis of the boss, although the stiffness of the mounting device with is different in the two planes.

Furthermore, the resilient wall is usually generally conical in shape, so that even a purely vertical vibration has a radial component. Therefore, it is possible that the chambers provide vertical damping.

In one form of hydraulic mounting device according to the invention also, the second anchor body is the cup of a "cup and boss" mounting device, and there are at least two side chambers which are interconnected and which communicate with the working chamber via a vent conduit.

In this case, the connecting channel(s) connecting the two side chambers, could consist of a further cavity of reduced width extending circumferentially around the axis of the boss between the side chambers. Alternatively, the conducting channel could be formed in a ring surrounding the radially outward surface of the resilient wall. The resilient wall may for example be formed with a varying radius about the axis of the boss, being of greater radius in first portions including side chamber(s) and reduced radius in second portions without side chambers, the ring extending radially inwardly to a greater extent in the second portions and including the conduction channel(s).

Fluid flowing between the chambers and/or between the chambers and the working chamber permits the walls of the side chambers to flex upon deformation of the resilient wall, and thus the stiffness of the resilient wall is reduced in a plane intersecting with the side chambers.

The dimensions of the fluid vent(s) and channel(s) can be selected to produce a desired damping characteristic of radial vibrations in one or both of the mirror planes. This effect could be used either to dampen vibrations over a particular frequency range, or alternatively to provide a reduced dynamic radial stiffness over a given frequency range.

For example, the size of the vent may be selected to be narrow enough to effectively prevent fluid flow except on long time scales.

Control elements may be provided within the mounting to vary the radial damping under selected vehicle conditions by altering the dimensions of the vent(s) and/or channel(s). For example, an electro-mechanical or pneumatic control means may be included to increase or reduce the size of the vent(s).

If there are two side chambers provided on opposite sides of the central chamber, then radial motions of the boss in the plane of the chambers are damped to a greater degree than radial displacements perpendicular to this plane. However, would also be possible to provide more side chambers, for example four chambers located equally spaced circumferentially around the central chamber, so that the degree of damping was made less dependent upon the direction of axial displacement.

Embodiments to the present invention will now be described in detail, by way of example, with reference to the accompanying drawings. In which;
Fig. 1 is a sectional view through a known hydraulically damped mounting device, and has been discussed above;
Fig. 2 is a sectional view of a first hydraulically damped mounting device according to the invention;
Fig. 3 is a sectional underside view of the hydraulically damped mounting device of Fig. 2; and
Fig. 4 is a sectional view of the hydraulically damped mounting device of Fig. 2 in plane X-X on Fig. 3.

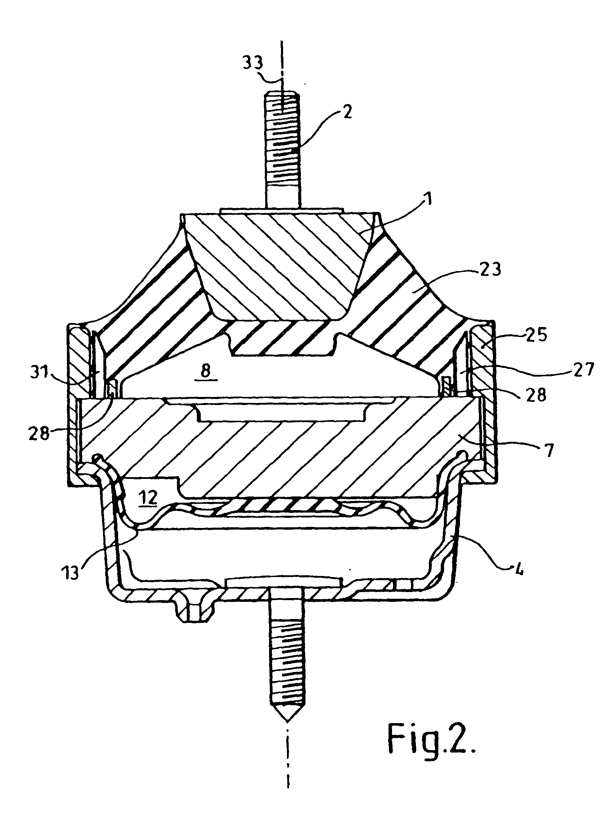

Fig. 2 shows a cross-sectional view of a first embodiment of the invention, in which the resilient wall 23 surrounding the working chamber 8 is formed with two side chambers 27, 31 in opposing locations.

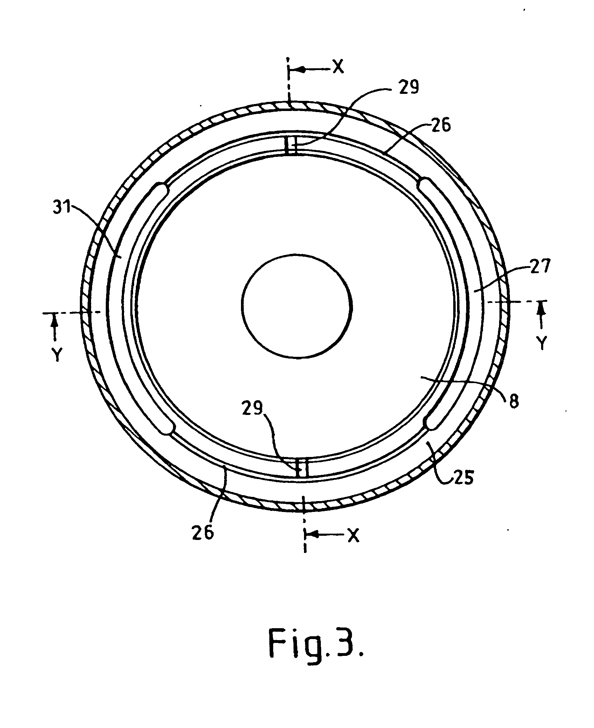

As can be seen from this figure, the resilient wall 23 extends from boss 1 to partition 7 and a ring 25. It includes a pair of side chambers 27, 31 on either side of the axis 33 of the boss 1, and slightly radially inward of the main part of the ring 25. The ring 25 also has an inner part 28 radially inward of the side chambers 27, 31. In the cross-section of Fig. 2, this inner part 28 appears separate from the rest of the ring 25. In fact, this is not the case, and the inner part 28 is joined to the rest of the ring 25 at other circumferential positions, as is shown in Fig. 3.

Fig. 3 is a cross-sectional view of the embodiment of Fig. 2 in a plane perpendicular to the axis 33. The view of Fig. 2 is the plane y-y shown in Fig. 3. The two side chambers are connected to which each other by a conducting channel 26 which extends circumferentially around the working chamber. Each conducting channel is connected to the working chamber 8 via a vent 29.

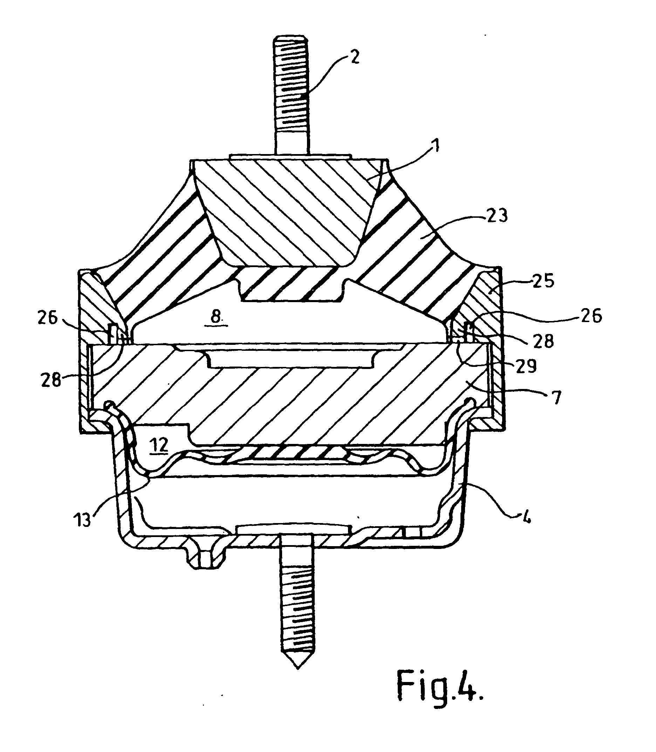

Fig. 4 shows a cross-section of the embodiment of Fig. 2 in the plane X-X marked on Fig. 3. This illustrates that in this plane the ring 25 extends radially inwardly to a greater extent, and includes the conducting channel 26 which connects the side chambers 27, 31. A vent 29 connects the connecting channel 26 to the working chamber 8.

The side chambers 27, 31 are thus supported by hydraulic fluid contained within them. Deformation of the mounting causes deformation of the chambers to an extent determined by the flow of hydraulic fluid between the side chambers and the working chamber 8, which is also filled with hydraulic fluid. Thus, by appropriate selection of the dimensions of the conducting channel 26 and the vent 29, the stiffness of the hydraulic mounting can be selected optimally, for example at a selected frequency range.

The asymmetry of the resilient wall may be effected by further means in addition to the side chambers, such as by variations in the thickness of the resilient walls, for example proximate to the partition, and/or by the inclusion of additional elements with elasticity higher or lower than that of the material composing the resilient wall.

For simplicity, the partition of the embodiment described is shown as being solid and rigid. While it is indeed possible for the partition to be solid and rigid, it is preferable that the partition includes one or more passageways (usually just one) linking the working chamber to the compensation chamber, and it may itself be resiliently deformable and/or include separate moving elements.

## Claims

1. A hydraulically damped mounting device for supporting a load, comprising first and second anchor bodies (1,7) vibratable relative to each other in an axial direction, a resilient wall (23) supporting and interconnecting the first and second anchor bodies and supporting the first anchor body (1) axially above the second anchor body (7), a working chamber (8) for hydraulic fluid axially between the first and second anchor bodies, the working chamber (8) being partially bounded by the resilient wall (23);
a compensation chamber (12) for the hydraulic fluid and partially bounded by a bellows wall;
a passageway (9) interconnecting the working (8) and compensation (12) chambers,
at least one side chamber (27,31) in the resilient wall (23), the at least one side chamber (27, 31) being arranged to impart a radially asymmetric deformation characteristic to said resilient wall (27), and being filled with hydraulic fluid;
**characterised in that**;
the at least one side chamber (27, 31) communicates with the working chamber (8).

2. A hydraulically damped mounting device according to claim 1, having two said side chambers (27,31) on opposite sides of the axis.

3. A hydraulically damped mounting device according to claim 2, wherein the side chambers (27,31) are interconnected by a connecting channel (26).

4. A hydraulically damped mounting device according to claim 3 where the connecting channel (26) is within the resilient wall (23).

5. A hydraulically damped mounting device according to claim 3, wherein the connecting channel is in a ring surrounding the resilient wall.

6. A hydraulically damped mounting device according to any one of the preceding claims, wherein the resilient wall (28) has varying radius.

7. A hydraulically damped mounting device according to any one of the preceding claims, wherein the first anchor body (1) is in the form of a boss and the resilient wall (23) extends around the boss and from the boss to the second anchor body (7).

8. A hydraulically damped mounting device according to any one of the preceding claims, wherein the passageway (9) is in a rigid partition forming part of the second anchor body (7) and partially bounding the working chamber.

## Patentansprüche

1. Hydraulisch gedämpfte Befestigungsvorrichtung zum Tragen einer Last, umfassend einen ersten und einen zweiten Ankerkörper (1, 7), die in einer axialen Richtung relativ zueinander schwingbar sind, eine federnde Wand (23), die den ersten und den zweiten Ankerkörper trägt und den ersten Ankerkörper (1) axial oberhalb des zweiten Ankerkörpers (7) trägt, eine Betriebskammer (8) für ein Hydraulikfluid axial zwischen dem ersten und dem zweiten Ankerkörper, wobei die Betriebskammer (8) teilweise von der federnden Wand (23) begrenzt ist;
eine Kompensationskammer (12) für das Hydraulikfluid, die teilweise von einer Faltwand begrenzt ist;
einen Durchlass (9), der die Betriebs- (8) und die Kompensationskammer (12) miteinander verbindet,
zumindest eine Seitenkammer (27, 31) in der federnden Wand (23), wobei die zumindest eine Seitenkammer (27, 31) angeordnet ist, um der federnden Wand (23) eine radial asymmetrische Verformungscharakteristik zu verleihen, und die mit der Hydraulikfluid gefüllt ist;
**dadurch gekennzeichnet, dass**
die zumindest eine Seitenkammer (27, 31) mit der Betriebskammer (8) kommuniziert.

2. Hydraulisch gedämpfte Befestigungsvorrichtung nach Anspruch 1 mit zwei Seitenkammern (27, 31) an gegenüberliegenden Seiten der Achse.

3. Hydraulisch gedämpfte Befestigungsvorrichtung nach Anspruch 2, worin die Seitenkammern (27, 31) durch einen Verbindungskanal (26) miteinander verbunden sind.

4. Hydraulisch gedämpfte Befestigungsvorrichtung nach Anspruch 3, worin der Verbindungskanal (26) innerhalb der federnden Wand (23) angeordnet ist.

5. Hydraulisch gedämpfte Befestigungsvorrichtung nach Anspruch 3, worin der Verbindungskanal in einem die federnde Wand umgebenden Ring angeordnet ist.

6. Hydraulisch gedämpfte Befestigungsvorrichtung nach einem der vorangegangenen Ansprüche, worin die federnde Wand (28) einen variierenden Radius aufweist.

7. Hydraulisch gedämpfte Befestigungsvorrichtung nach einem der vorangegangenen Ansprüche, worin der erste Ankerkörper (1) die Form einer Nabe aufweist und die federnde Wand (23) sich rund um die Nabe und von der Nabe zum zweiten Ankerkörper (7) erstreckt.

8. Hydraulisch gedämpfte Befestigungsvorrichtung nach einem der vorangegangenen Ansprüche, worin der Durchlass (9) in einem starren, eine Abtrennung bildenden Teil des zweiten Ankerkörpers (7) angeordnet ist und teilweise die Betriebskammer begrenzt.

## Revendications

1. Un dispositif de montage à amortissement hydraulique pour le support d'une charge, comprenant de premier et second corps d'ancrage (1, 7) pouvant vibrer l'un par rapport à l'autre dans une direction axiale, une paroi élastique (23) supportant et reliant entre eux les premier et second corps d'ancrage et supportant le premier corps d'ancrage (1) axialement au-dessus du second corps d'ancrage (7), une chambre de travail (8) pour fluide hydraulique axialement entre les premier èt second corps d'ancrage, la chambre de travail (8) étant partiellement limitée par la paroi élastique (23);
une chambre de compensation (12) pour le fluide hydraulique et partiellement limitée par une paroi à soufflet;
une voie de passage (9) reliant entre elles les chambres de travail (8) et de compensation (12),
au moins une chambre latérale (27, 31) formée dans la paroi élastique (23), cette au moins une chambre latérale (27, 31) étant disposée pour fournir à ladite paroi élastique (23) une caractéristique de déformation radialement asymétrique, et étant remplie de fluide hydraulique;
**caractérisé en ce que**:
cet au moins une chambre latérale (27, 31) communique avec la chambre de travail (8).

2. Un dispositif de montage à amortissement hydraulique selon la revendication 1, présentant deux desdites chambres latérales (27, 31) sur des côtés opposés de l'axe.

3. Un dispositif de montage à amortissement hydraulique selon la revendication 2, dans lequel les chambres latérales (27, 31) sont reliées entre elles par un canal de liaison (26).

4. un dispositif de montage à amortissement hydraulique selon la revendication 3 où le canal de liaison (26) est à l'intérieur de la paroi élastique (23).

5. Un dispositif de montage à amortissement hydraulique selon la revendication 3, dans lequel le canal de liaison est dans une bague entourant la paroi élastique.

6. Un dispositif de montage à amortissement hydraulique selon l'une quelconque des revendications précédentes, dans lequel la paroi élastique (28) présente un rayon variable.

7. Un dispositif de montage à amortissement hydraulique selon l'une quelconque des revendications précédentes, dans lequel le premier corps d'ancrage (1) est sous la forme d'une protubérance, la paroi élastique (23) s'étendant autour de la protubérance et depuis la protubérance jusqu'au second corps d'ancrage (7).

8. Un dispositif de montage à amortissement hydraulique selon l'une quelconque des revendications précédentes, dans lequel la voie de passage (9) est une cloison rigide faisant partie du second corps d'ancrage (7) et limitant partiellement la chambre de travail.
